Europäisches Patentamt

European Patent Office

Office européen des brevets

(11) Publication number: **0 314 282**
**A1**

## (12) EUROPEAN PATENT APPLICATION

(21) Application number: 88308473.3

(22) Date of filing: 14.09.88

(51) Int. Cl.⁴: **F16D 65/56 , F16D 65/16 , F16D 55/224**

(30) Priority: 10.10.87 GB 8723858

(43) Date of publication of application:
03.05.89 Bulletin 89/18

(84) Designated Contracting States:
**AT BE DE ES FR IT SE**

(71) Applicant: **GENERAL MOTORS FRANCE
56 à 68 Avenue Louis Roche
F-92231 Gennevilliers Paris(FR)**

(72) Inventor: **Dick, Jean-Marc
7 rue du Président Kennedy
F-95120 Ermont(FR)**
Inventor: **Grégoire, Gabriel
6 Les Grand Clos
Asnières S/Oise F-95270 Luzarches(FR)**

(74) Representative: **Denton, Michael John et al
Patent Section - Luton Office (F6) Vauxhall
Motors Limited P.O. Box 3 Kimpton Road
Luton Bedfordshire LU2 0SY(GB)**

(54) Disc brake caliper assembly.

(57) A disc brake caliper assembly for a rotary disc brake of a vehicle which has a parking brake mechanism and a wear adjustment mechanism is described. The disc brake caliper assembly (10) includes a caliper housing (14) with a piston (28) slidably mounted therein, but prevented from rotating by a lug (30) on a brake shoe (16) secured thereto which keys in a groove (32) in the piston. An actuator screw (44) and actuator nut (66) are positioned in an internal bore (65) in the piston for mechanical actuation of the brakes. If the brake pads (20,22) wear, on hydraulic actuation of the brakes, a thrust washer (78) engages and moves the actuator nut axially along the actuator screw to a new position which restricts reverse movement of the piston to a new (wear adjusted) position relative to the caliper housing. A one-way clutch assembly (68) prevents reverse movement of the actuator nut.

Fig.1.

# DISC BRAKE CALIPER ASSEMBLY

This invention relates to a disc brake caliper assembly for a rotary disc brake of a vehicle, and in particular to a disc brake caliper assembly having a parking brake mechanism and a wear adjustment mechanism.

A disc brake caliper assembly having a parking brake mechanism and a wear adjustment mechanism is known from GB Patent No. 1,297,495.

It is an object of the present invention to provide an improvement to the above mentioned known arrangement.

To this end, a disc brake caliper assembly in accordance with the present invention comprises first and second brake shoes having integral brake pads of friction lining material for frictionally engaging the rotary disc brake, the first brake shoe having a lug projecting therefrom on the opposite side to the brake pad; a caliper housing to which the second brake shoe is secured and having a cavity therein defining an expansion chamber for hydraulic fluid; an inlet port opening into the expansion chamber for passage of the hydraulic fluid; a piston sealingly slidably mounted in the cavity in the caliper housing and projecting from one end of the cavity, the first brake shoe being secured to the piston at one end thereof outside the cavity with the lug on the first brake shoe projecting into a corresponding groove in the piston to key the first brake shoe and the piston together to prevent the piston rotating relative to the caliper housing, the piston having an internal bore having a longitudinal axis and having an open end opening into the expansion chamber; a thrust washer secured in the internal bore of the piston adjacent the open end of the internal bore; an actuator nut positioned in the internal bore between the thrust washer and an abutment surface defined by the internal bore with a functional gap between the actuator nut and the thrust washer, the actuator nut having a longitudinal axis; a one-way clutch assembly secured in the internal bore and positioned between and engaging the actuator nut and the piston, the one-way clutch assembly allowing rotation of the actuator nut relative to the caliper housing in one direction only; and an actuator screw and associated mechanism sealingly mounted in the cavity in the caliper housing and projecting from the other end of the cavity, the actuator screw having a longitudinal axis, the longitudinal axes of the actuator screw, the actuator nut, and the internal bore being aligned, the associated mechanism including a lever positioned outside the cavity and connected to the actuator screw, the actuator screw extending into the internal bore and threadingly engaging the actuator nut;

hydraulic actuation of the disc brake caliper assembly being actuated by pressurising the hydraulic fluid in the expansion chamber to move the piston relative to the caliper housing in an axial direction such that the brake pads frictionally engage the rotary disc brake, the distance moved by the piston being greater than the functional gap between the actuator nut and the thrust washer if wear of the brake pads has occurred such that the thrust washer engages the actuator nut to rotate the actuator nut about the actuator screw relative to the caliper housing and to move the actuator nut relative to the caliper housing in the same axial direction as the piston, reverse movement and rotation of the actuator nut being prevented by the one-way clutch assembly on release of the hydraulic fluid pressure thereby restricting reverse movement of the piston to a wear adjusted position relative to the caliper housing; mechanical actuation of the disc brake caliper assembly being actuated by applying a force to the lever to rotate the lever about the longitudinal axes to move the actuator screw, and due to the action of the one-way clutch assembly, to move the actuator nut in an axial direction relative to the caliper housing to engage the abutment surface in the internal bore to move the piston in the same axial direction such that the brake pads frictionally engage the rotary disc brake.

The present invention has the advantage over the above mentioned known arrangement of preventing rotation of the piston relative to the caliper housing on actuation and release of the brakes, thereby overcoming any tendency of the piston to rotate to counter the effects of the one-way clutch assembly. Further, the provision of a functional gap between the actuator nut and the thrust washer prevents over adjustment of the position of the piston when compensating for wear.

Preferably, the actuator screw has a stepped portion which is sealingly rotatably mounted in, and passes through, an opening in the other end of the cavity, the lever of the associated mechanism being connected to the stepped portion outside the caliper housing such that rotation of the lever about the longitudinal axis of the actuator screw causes rotation of the actuator screw about the same axis. In this case, the actuator screw preferably includes a threaded portion outside the caliper housing, and the associated mechanism includes a jam nut which on threading to the threaded portion of the actuator screw outside the caliper housing secures the actuator screw and associated mechanism in position.

Alternatively, the associated mechanism may include a piston member sealingly slidably mounted in a channel section extending from an opening in the other end of the cavity, an eccentric shaft connected to the lever to rotate with the lever, and a pushrod connected between the eccentric shaft and the piston member; and in this case the actuator screw is connected to the piston member such that rotation of the lever about the longitudinal axis of the actuator screw causes rotation of the eccentric shaft, thereby causing axial movement of the pushrod, piston member, and actuator screw in a direction along the longitudinal axis of the actuator screw. In this case, the associated mechanism preferably includes a spring which acts on the piston member and the actuator screw in an opposite direction to the axial direction of movement of the actuator nut when the disc brake caliper assembly is mechanically actuated.

Preferably, the one-way clutch assembly comprises rollers, each with an associated spring, and ramps formed in an inner surface portion of the internal bore of the piston. Alternatively, the one-way clutch assembly may comprise a pre-assembled one-way clutch comprising a cage which is fixedly secured to the piston within the internal bore of the piston, and rollers, each with an associated spring.

The present invention will now be described, by way of example, with reference to the accompanying drawings, in which:-

Figure 1 is a cross-sectional view of a first embodiment of disc brake caliper assembly in accordance with the present invention;

Figure 2 is a cross-sectional view of a second embodiment of disc brake caliper assembly in accordance with the present invention;

Figure 3 is a cross-sectional view of a third embodiment of disc brake caliper assembly in accordance with the present invention;

Figure 4 is a cross-sectional view of a fourth embodiment of disc brake caliper assembly in accordance with the present invention;

Figure 5 is a cross-sectional view of the piston, actuator nut, and one-way clutch assembly of the disc brake caliper assembly shown in Figures 1 and 3;

Figure 6 is a cross-sectional view on the line VI-VI of Figure 5;

Figure 7 is a cross-sectional view of the piston, actuator nut, and one-way clutch assembly of the disc brake caliper assembly shown in Figures 2 and 4;

Figure 8 is an end view of the pistons shown in Figures 5 and 7;

Figure 9 is a cross-sectional view of the caliper housing and the actuator screw and associated mechanism of the disc brake caliper assembly shown in Figures 1 and 2;

Figure 10 is a cross-sectional view of the caliper housing and the actuator screw and associated mechanism of the disc brake caliper assembly shown in Figures 3 and 4;

Figures 11 and 12 are end and cross-sectional views respectively of the resilient clips shown in Figures 1 to 4;

Figure 13 is a cross-sectional view, similar to that of Figure 5, showing an alternative arrangement; and

Figure 14 is a cross-sectional view on the line XIV - XIV of figure 13.

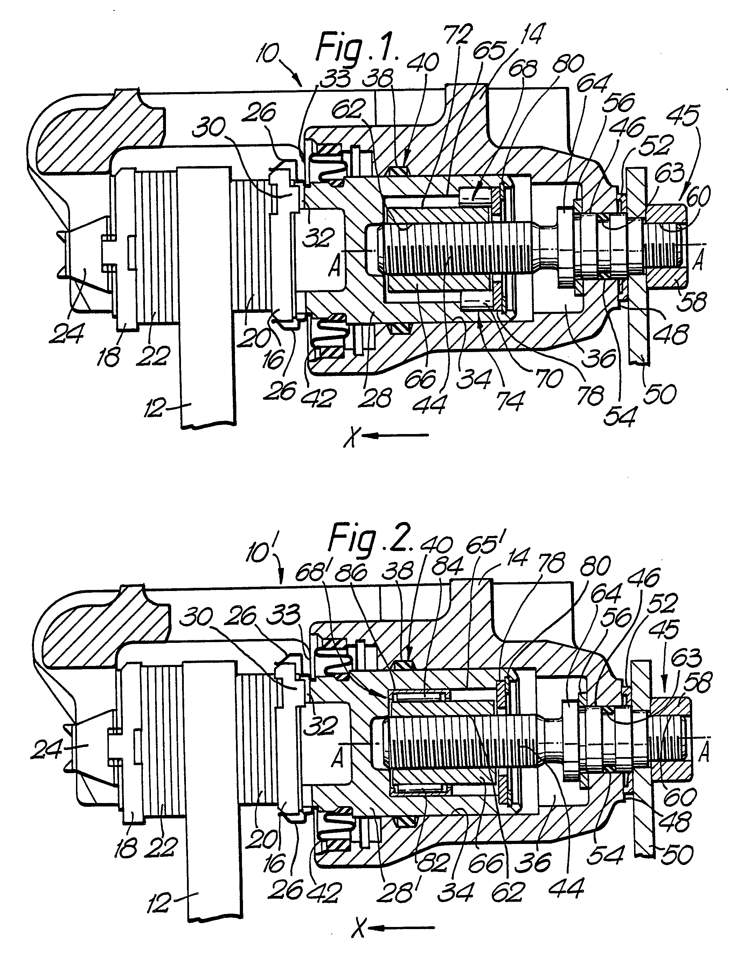

Referring to Figure 1 of the drawings, a disc brake caliper assembly 10 in accordance with a first embodiment of the present invention is shown in position about a portion of a rotary disc brake 12. The disc brake caliper assembly 10 comprises a caliper housing 14 and inboard and outboard brake shoes 16,18 respectively. Each brake shoe 16,18 has a brake pad 20,22 respectively of friction lining material for frictionally engaging the rotary disc brake 12. A retainer spring 24 secures the outboard brake shoe 18 to the caliper housing 14.

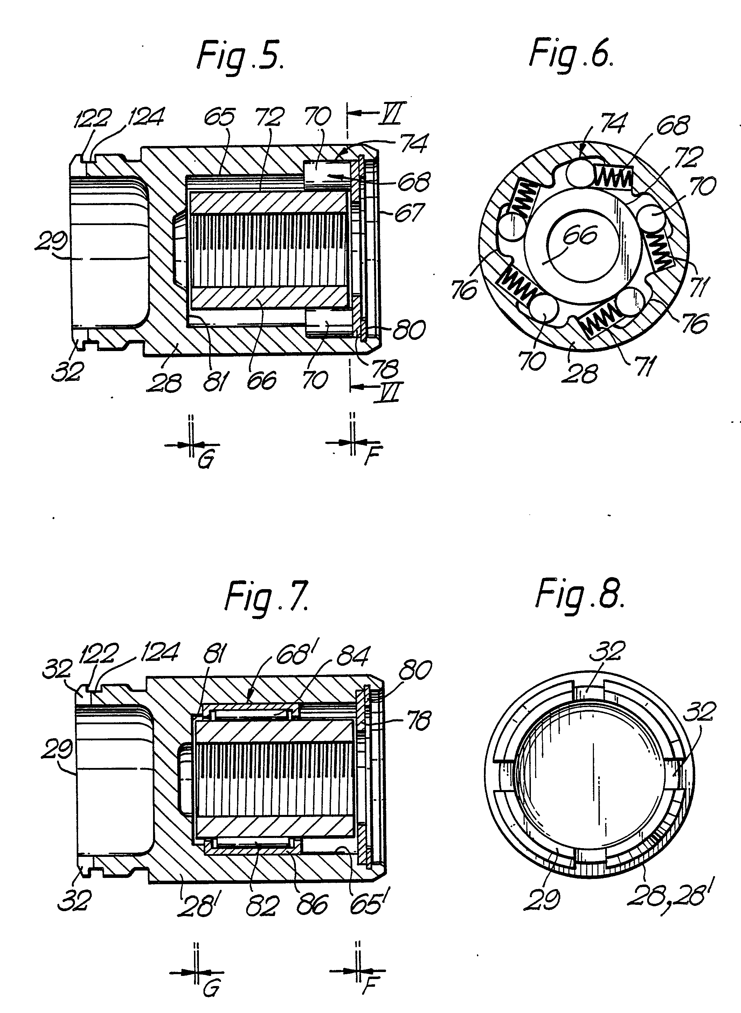

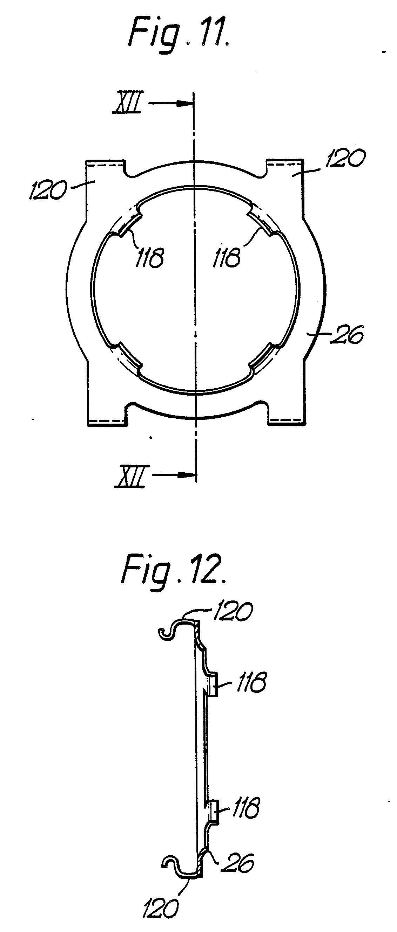

The inboard brake shoe 16 is secured by a resilient clip 26 to a piston 28. The arrangement of the resilient clip 26 and the piston 28 is shown more clearly in Figures 5, 7, 8, 11, and 12. The resilient clip 26 has four inwardly projecting legs 118 and four outwardly projecting legs 120 (which are substantially U-shaped). The resilient clip 26 is secured to the piston 28 by passing the inwardly projecting legs 118 through corresponding grooves 32 in one end 29 of the piston, and then rotating the resilient clip relative to the piston such that the inwardly projecting legs engage a lip 122 defined by an annular groove 124 in the piston adjacent the said one end 29. The outwardly projecting legs 120 engage and secure the inboard brake shoe 16 to the piston 28. The inboard brake shoe 16 also has a lug 30 which projects into one of the grooves 32 in the piston 28 to key the inboard brake shoe and the piston together to prevent them rotating relative to one another.

The piston 28 is slidably mounted in, and projects from one end 33 of, a cavity 34 in the caliper housing 14. The piston 28 and the caliper housing 14 define an expansion chamber 36 in the cavity 34. An inlet port (not shown) provides an inlet for hydraulic fluid to the expansion chamber 36. A piston seal 38 is positioned in a groove 40 in the walls of the cavity 34 to provide a seal with the piston 28 to substantially prevent leakage of hydraulic fluid from the expansion chamber 36 around the piston. A flexible boot 42 engages the piston 28 and the walls of the cavity 34 adjacent the end 33 of the cavity from which the piston projects. The flexible boot 42 substantially prevents dirt and moisture entering the cavity 34, thereby substantially preventing damage to the piston seal 38 or to the walls of the cavity and/or the piston 28.

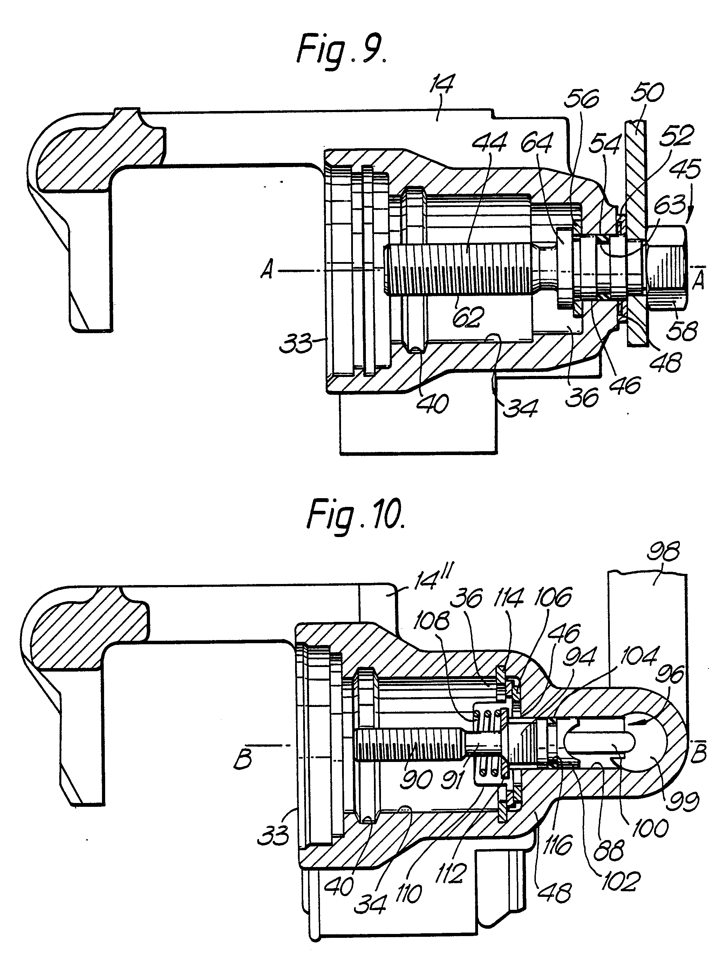

Sealingly mounted in the caliper housing 14 is an actuator screw 44, which is secured to associated mechanism 45 (see Figure 9), and which passes through an opening 46 at the opposite end 48 of the cavity 34. The associated mechanism 45 comprises a parking brake lever 50, a lever seal 52 (which is a moulded rubber seal with a resilient metallic insert), a screw seal 54, a thrust washer 56, and a jam nut 58. The actuator screw 44 has a shank which has a short external threaded portion 60 adjacent one end, a long external threaded portion 62 adjacent the other end, and an intermediate stepped portion 64. The actuator screw 44 and associated mechanism 45 are assembled as shown with the jam nut 58 threaded to the short external threaded portion 60 of the shank of the actuator screw. A portion of the intermediate stepped portion 64 is rotatably mounted in the opening 46. The screw seal 54 is positioned in a groove 63 in the intermediate stepped portion 64 and engages the wall of the opening 46 to substantially prevent leakage of hydraulic fluid from the expansion chamber 36 around the intermediate stepped portion 64 of the actuator screw 44. The thrust washer 56, lever seal 52 and jam nut 58 secure the actuator screw 44 in position, but allow rotation thereof about its longitudinal axis A relative to the caliper housing 14. The parking brake lever 50 is attached to the intermediate stepped portion 64 of the actuator screw 44 in such a way that the parking brake lever and the actuator screw rotate together about the axis A. The long external threaded portion 62 of the actuator screw 44 projects into an internal bore 65 having an open end 67 formed in the piston 28 at the opposite end to the said one end 29.

An actuator nut 66 threadingly engages the long external threaded portion 62 of the actuator screw 44 within the internal bore 65 of the piston 28. The actuator nut 66, actuator screw 44, and internal bore 65 all have the same longitudinal axis A. In the embodiment of Figure 1, and as shown in more detail in Figures 5 and 6, the actuator nut 66 is attached to the piston 28 by a one-way clutch assembly 68 which comprises rollers 70 and springs 71 positioned between the cylindrical outer surface 72 of the actuator nut 66 and an inner surface portion 74 of the internal bore 65 of the piston 28 adjacent the open end 67 and which has been formed to define a number of ramps 76. The ramps 76 may be formed by any suitable process, for example, extrusion, cold forging, machining or moulding. An anti-friction thrust washer 78 and annular retainer 80 secure the rollers 70 and springs 71 in position, and retain the actuator nut 66 within the internal bore 65. The actuator nut 66 is retained within the internal bore 65 such that when the brakes are not applied, a functional gap F exists between the actuator nut and the anti-friction thrust washer 78, and a functional gap G exists between the actuator nut and an abutment surface 81 defined in the internal bore, as shown in Figure 5.

The hydraulic and mechanical actuation of the disc brake caliper assembly 10 of Figure 1 will be described in more detail hereinafter.

A second embodiment of a disc brake caliper assembly 10' in accordance with the present invention is shown in Figure 2. Parts which are identical to those in Figure 1 have been given the same reference number. In this second embodiment, the one-way clutch assembly 68' is defined by a pre-assembled one-way clutch 82 comprising rollers 84 and springs (not shown) retained in a cage 86 (see Figure 7). As a consequence, the internal bore 65' of the piston 28' does not need to have any ramps formed therein. In this arrangement, the pre-assembled one-way clutch 82 is pressed into the internal bore 65' of the piston 28' such that the cage 86 forms a tight fit in the internal bore to prevent rotation of the pre-assembled one-way clutch 82 relative to the piston 28'.

The hydraulic and mechanical actuation of the first and second embodiments of disc brake caliper assembly 10,10' respectively is substantially the same. Hydraulic actuation is achieved by the vehicle operator applying the brakes in the usual way, for example, by depression of the vehicle brake pedal (not shown). Hydraulic fluid passes through the inlet port (not shown) into the expansion chamber 36. The build up of pressure in the expansion chamber 36 forces the piston 28,28' to move in the axial direction X relative to the caliper housing 14. This movement of the piston 28,28' moves the brake pad 20 on the inboard brake shoe 16 into frictional engagement with the rotary disc brake 12, and by a reaction force through the caliper housing 14 similarly moves the brake pad 22 of the outboard brake shoe 18 into frictional engagement with the rotary disc brake. When the vehicle operator releases the brakes, the pressure in the expansion chamber 36 is released and the elastic reaction force of the piston seal 38 moves the piston 28,28' back in the opposite direction to X.

If wear of the brake pads 20,22 does not occur, the piston 28,28' moves in the axial direction X a distance which is less than or equal to the functional gap F, and the anti-friction thrust washer 78 does not engage and move the actuator nut 66. That is, the position of the actuator nut 66 relative to the actuator screw 44 and the caliper housing 14 does not change during hydraulic application of the brakes. If wear does occur, the piston 28,28'

moves a distance which is greater than the functional gap F, causing the anti-friction thrust washer 78 to engage the actuator nut 66, which causes the actuator nut to rotate about the actuator screw 44 and also move in the axial direction X relative to the caliper housing 14. The one-way clutch assembly 68,68' does not prevent this rotation of the actuator nut 66. When the hydraulic pressure is released, the one-way clutch assembly 68,68' prevents reverse rotation of the actuator nut 66 relative to the actuator screw 44, thereby preventing movement of the actuator nut in a direction opposite to X. Because the piston 28,28' is keyed to the inboard brake shoe 16 by the lug 30 and groove 32 arrangement, the piston is prevented from rotating about the actuator screw 44, and as a consequence, the piston can only move in the direction opposite to X (assisted by the elastic reaction force of the piston seal 38) by a distance which is sufficient to restore the functional gap F between the actuator nut 66 and the anti-friction thrust washer 78, that is, the piston moves back to a new (wear adjusted) position relative to the caliper housing. This arrangement therefore provides automatic adjustment for wear each time the brakes are hydraulically applied.

The disc brake caliper assembly 10,10' is actuated mechanically by the vehicle operator in the usual way, for example, by actuation of the hand brake lever (not shown). Such actuation results in a force being applied to the parking brake lever 50, causing the parking brake lever and the actuator screw 44 to rotate about the axis A relative to the caliper housing 14. The one-way clutch assembly 68,68' is such as to prevent the actuator nut 66 rotating in the same direction, and the lug 30 and groove 32 arrangement prevents the piston 28,28' rotating with the actuator screw 44. As a consequence the actuator nut 66 moves in the axial direction X relative to the caliper housing 14 to close the functional gap G, engage the abutment surface 81, and move the piston 28,28' in the axial direction X. Such movement of the piston 28,28' moves the brake pad 20 of inboard brake shoe 16 into frictional engagement with the rotary disc brake 12, and, by a reaction force through the caliper housing 14, similarly moves the brake pad 22 of the outboard brake shoe 18 into frictional engagement with the rotary disc brake.

Release of the mechanical actuation reverses the direction of rotation of the parking brake lever 50 and actuator screw 44 about the axis A relative to the caliper housing 14. This causes the actuator nut 66 (and the piston 28,28') to move axially in a direction opposite to X relative to the caliper housing 14 because a residual torque created by the rollers 70,84 and springs 71 of the one-way clutch assembly 68,68' prevents the actuator nut rotating relative to the actuator screw 44 during this reverse axial movement. The elastic reaction force of the piston seal 38 also assists in moving the piston 28,28' back to its original position.

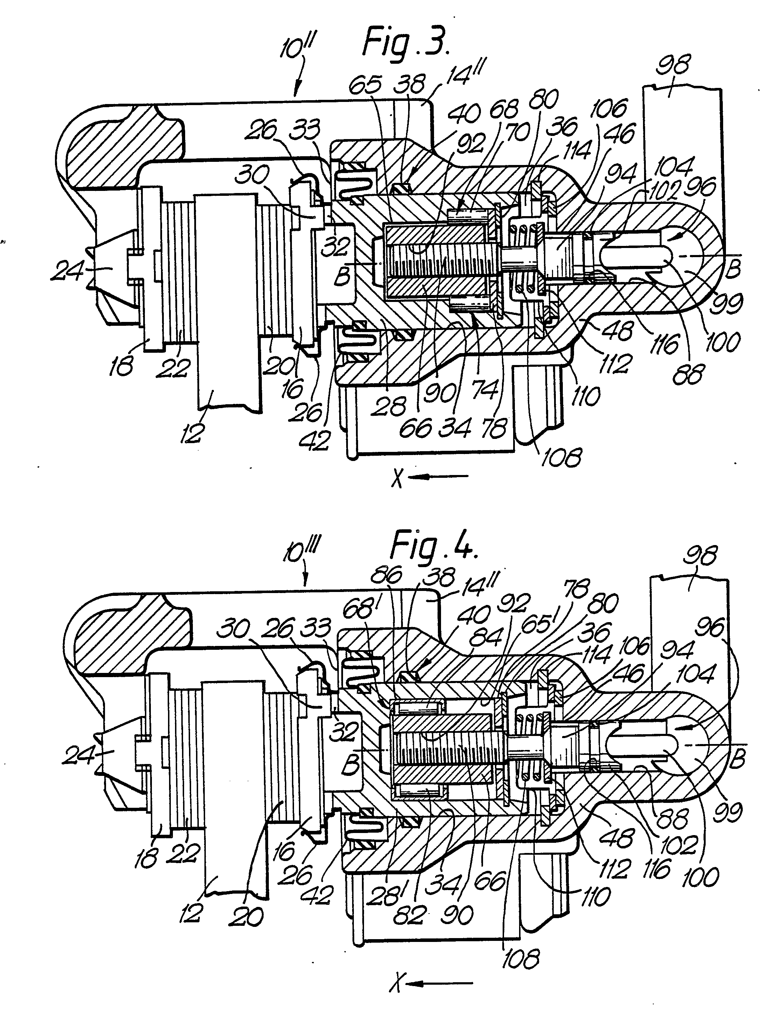

A third embodiment of disc brake caliper assembly 10" in accordance with the present invention is shown in Figure 3. This third embodiment is similar to the first embodiment shown in Figure 1, and similar parts have been given the same reference number. The main difference between the third embodiment and the first embodiment is the actuator screw, its associated mechanism, and its mode of operation. The caliper housing 14" of this third embodiment has been modified to accommodate the above mentioned differences. The caliper housing 14" includes a channel section 88 extending from the opening 46 at its opposite end 48. The actuator screw 90 in Figure 3 comprises a shank 91 having an external threaded portion 92 and a head 94. The external threaded portion 92 threadingly engages the actuator nut 66. The associated mechanism 96 (see Figure 10) comprises a parking brake lever 98, an eccentric shaft 99, a pushrod 100, a piston member 102, a seal 104, a thrust washer 106, a spring 108, a spring retainer 110, a thrust washer 112 and a retainer stop 114. The piston member 102 is a sliding fit in the channel section 88 of the caliper housing 14" and has a groove 116 therein in which the seal 104 is positioned to substantially prevent leakage of hydraulic fluid from the expansion chamber 36 around the piston member. The piston member 102 is secured at one end to the head 94 of the actuator screw 90, and engages the pushrod 100 at its other end. The pushrod 100 also engages the eccentric shaft 99, which is connected to the parking brake lever 98. This arrangement is such that if the parking brake lever 98 is rotated about the longitudinal axis B of the actuator screw 90, the eccentric shaft 99 is also rotated causing the pushrod 100, the piston member 102 and the actuator screw 90 to move in an axial direction (parallel to the axial direction X) along the axis B. This arrangement differs from that in the first and second embodiments of Figures 1 and 2, where rotation of the parking brake lever 50 causes rotation of the actuator screw 44 about its longitudinal axis A. In this third embodiment, rotation of the parking brake lever 98 causes axial movement of the actuator screw 90 along its longitudinal axis B relative to the caliper housing 14". The spring 108 and its spring retainer 110 and thrust washer 112 are positioned on the opposite side of the head 94 of the actuator screw 90 to the piston member 102 within the expansion chamber 36.

The hydraulic and mechanical actuation of this third embodiment of disc brake caliper assembly 10' will be described hereinafter.

Figure 4 shows a fourth embodiment of disc brake caliper assembly 10‴ in accordance with the present invention. This fourth embodiment is similar to the third embodiment shown in Figure 3, and like parts have been given the same reference number. The difference lies in the use of the one-way clutch assembly 68′ of Figure 7, rather than the one-way clutch assembly 68 of Figures 5 and 6 (as used in the third embodiment shown in Figure 3).

The hydraulic actuation of the third and fourth embodiments of Figures 3 and 4 respectively is the same as that of the first and second embodiments of Figures 1 and 2 respectively.

The mechanical actuation of the third and fourth embodiments of disc brake caliper assembly 10″,10‴ of Figures 3 and 4 respectively is substantially the same. The disc brake caliper assembly 10″,10‴ is operated mechanically in the usual way by the vehicle operator, for example, by actuation of the hand brake lever (not shown). Such actuation results in a force being applied to the parking brake lever 98 which rotates the parking brake lever and the eccentric shaft 99 about the axis B relative to the caliper housing 14″. Rotation of the eccentric shaft 99 causes the pushrod 100, the piston member 102 and the actuator screw 90 to move in the axial direction X relative to the caliper housing 14″. As the head 94 of the actuator screw 90 engages the thrust washer 112, the thrust washer 112 is also moved in the axial direction X relative to the caliper housing 14″. As the spring retainer 110 engages the retainer stop 114, the spring 108 is compressed due to the relative movement of the thrust washer 112. The one-way clutch assembly 68,68′ prevents the actuator nut 66 from rotating about the actuator screw 90, and the lug 30 and groove 32 arrangement prevents the piston 28,28′ from rotating relative to the caliper housing 14″. As a consequence, the axial movement of the actuator screw 90 causes the actuator nut 66 to move in the axial direction X relative to the caliper housing 14″ to close the functional gap G. The actuator nut 66 then engages the abutment surface 81 of the internal bore 65,65′ of the piston 28,28′ to move the piston in the axial direction X relative to the caliper housing 14″. Such movement of the piston 28,28′ moves the brake pad 20 of inboard brake shoe 16 into frictional engagement with the rotary disc brake 12, and, by a reaction force through the caliper housing 14, similarly moves the brake pad 22 of the outboard brake shoe 18 into frictional engagement with the rotary disc brake.

Release of the mechanical actuation reverses the direction of rotation of the parking brake lever 98 and eccentric shaft 99 about the axis B relative to the caliper housing 14″. This allows the pushrod 100, the piston member 102, and the actuator screw 90 to move axially in the reverse direction to X relative to the caliper housing 14″ under the action of the spring 108. A residual torque created by the rollers 70,84 and springs 71 of the one-way clutch assembly 68,68′ prevents the actuator nut 66 rotating relative to the actuator screw 90 during this reverse axial movement. The actuator nut 66 and the piston 28,28′ therefore also move axially in a reverse direction to X relative to the caliper housing 14″. The elastic reaction force of the piston seal 38 also assists in moving the piston 28,28′ back to its original position.

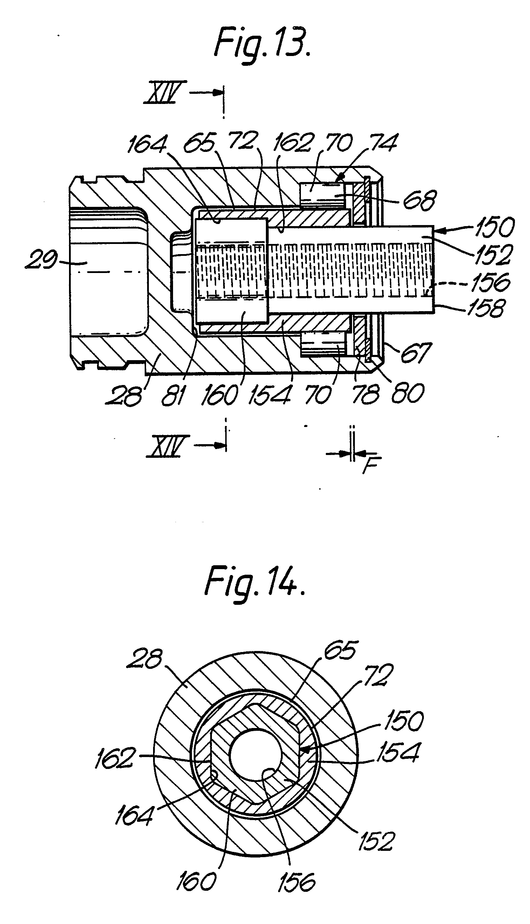

The arrangement of piston, actuator nut and one-way clutch assembly shown in Figures 13 and 14 is similar to that shown Figure 5, and like parts have been given the same reference number.

In this modified arrangement, the actuator nut 150 comprises an inner sleeve 152 and an outer sleeve 154. The inner sleeve 152 has a threaded internal bore 156 for engaging an actuator screw. The inner sleeve 152 extends through the anti-friction thrust washer 78 and annular retainer 80 at one end 158, and at its other end (adjacent the abutment surface 81) has a shaped portion 160 defining a hexagonal cross-section along a portion of its length. The outer sleeve 154 is mounted on the inner sleeve 152 within the internal bore 65 of the piston 28, and can slide relative to the inner sleeve over a limited distance between the abutment surface 81 and the anti-friction thrust washer 78. The outer sleeve 154 provides the cylindrical outer surface 72 of the actuator nut 150, and also defines the functional gap F between the actuator nut and the anti-friction thrust washer 78. The outer sleeve 154 has an internal bore 162 with a shaped portion 164 along a portion of its length which corresponds to the shaped portion 160 of the inner sleeve 152, to prevent the outer sleeve rotating relative to the inner sleeve. This arrangement reduces the drag torque on the motor vehicle, and substantially reduces the risk of overadjustment of the brakes.

Although the shaped portions 160,164 have been shown as hexagonal in cross-section, other suitable shapes could, of course, be used.

The present invention has the further advantages over the above mentioned known arrangement of not requiring an adjuster spring, and of providing wear adjustment during hydraulic actuation of the brake which substantially corresponds to the wear on the brake pads.

## Claims

1. A disc brake caliper assembly (10) for a rotary disc brake (12) of a vehicle comprising first and second brake shoes (16,18) having integral brake pads (20,22) of friction lining material for frictionally engaging the rotary disc brake; a caliper housing (14) to which the second brake shoe (18) is secured and having a cavity (34) therein defining an expansion chamber (36) for hydraulic fluid; an inlet port opening into the expansion chamber for passage of the hydraulic fluid; a piston (28) sealingly slidably mounted in the cavity in the caliper housing and projecting from one end (33) of the cavity, the piston having an internal bore (65) having a longitudinal axis (A) and having an open end (67) opening into the expansion chamber; a thrust washer (78) secured in the internal bore of the piston adjacent the open end of the internal bore; an actuator nut (66) positioned in the internal bore, the actuator nut having a longitudinal axis (A); a one-way clutch assembly (68) secured in the internal bore and positioned between and engaging the actuator nut and the piston, the one-way clutch assembly allowing rotation of the actuator nut relative to the caliper housing in one direction only; and an actuator screw (44) and associated mechanism (45) sealingly mounted in the cavity in the caliper housing and projecting from the other end (48) of the cavity, the actuator screw having a longitudinal axis (A), the longitudinal axes of the actuator screw, the actuator nut, and the internal bore being aligned, the associated mechanism including a lever (50) positioned outside the cavity and connected to the actuator screw, the actuator screw extending into the internal bore and threadingly engaging the actuator nut; hydraulic actuation of the disc brake caliper assembly being actuated by pressurising the hydraulic fluid in the expansion chamber to move the piston relative to the caliper housing in an axial direction such that the brake pads frictionally engage the rotary disc brake; mechanical actuation of the disc brake caliper assembly being actuated by applying a force to the lever to rotate the lever about the longitudinal axes to move the actuator screw, and due to the action of the one-way clutch assembly, to move the actuator nut in an axial direction relative to the caliper housing to engage the abutment surface in the internal bore to move the piston in the same axial direction such that the brake pads frictionally engage the rotary disc brake; characterised in that the first brake shoe (16) has a lug (30) projecting therefrom on the opposite side to the brake pad; in that the first brake shoe (16) is secured to the piston (28) at one end thereof outside the cavity with the lug (30) on the first brake shoe projecting into a corresponding groove (40) in the piston to key the first brake shoe and the piston together to prevent the piston rotating relative to the caliper housing (14); in that the actuator nut (66) is positioned between the thrust washer (78) and an abutment surface (81) defined by the internal bore (65) with a functional gap (F) between the actuator nut and the thrust washer such that on hydraulic actuation the distance moved by the piston is greater than the functional gap between the actuator nut and the thrust washer if wear of the brake pads (20,22) has occurred such that the thrust washer engages the actuator nut to rotate the actuator nut about the actuator screw relative to the caliper housing and to move the actuator nut relative to the caliper housing in the same axial direction as the piston, reverse movement and rotation of the actuator nut being prevented by the one-way clutch assembly on release of the hydraulic fluid pressure thereby restricting reverse movement of the piston to a wear adjusted position relative to the caliper housing.

2. A disc brake caliper assembly as claimed in Claim 1, wherein the actuator screw (44) has a stepped portion (64) which is sealingly rotatably mounted in, and passes through, an opening (46) in the other end (48) of the cavity (34), the lever (50) of the associated mechanism (45) being connected to the stepped portion outside the caliper housing (14) such that rotation of the lever about the longitudinal axis (A) of the actuator screw causes rotation of the actuator screw about the same axis.

3. A disc brake caliper assembly as claimed in Claim 2, wherein the actuator screw (44) includes a threaded portion outside the caliper housing (14), and the associated mechanism (45) includes a jam nut (58) which on threading to the threaded portion of the actuator screw outside the caliper housing secures the actuator screw and associated mechanism in position.

4. A disc brake caliper assembly as claimed in Claim 1, wherein the associated mechanism (96) includes a piston member (102) sealingly slidably mounted in a channel section (88) extending from an opening (46) in the other end (48) of the cavity (34), an eccentric shaft (99) connected to the lever (98) to rotate with the lever, and a pushrod (100) connected between the eccentric shaft and the piston member; and wherein the actuator screw (90) is connected to the piston member such that rotation of the lever about the longitudinal axis (B) of the actuator screw causes rotation of the eccentric shaft, thereby causing axial movement of the pushrod, piston member, and actuator screw in a direction along the longitudinal axis of the actuator screw.

5. A disc brake caliper assembly as claimed in Claim 4, wherein the associated mechanism (96) includes a spring (108) which acts on the piston member (102) and the actuator screw (90) in an opposite direction to the axial direction of movement of the actuator nut when the disc brake caliper assembly is mechanically actuated.

6. A disc brake caliper assembly as claimed in any one of the preceding Claims, wherein the one-way clutch assembly (68) comprises rollers (70), each with an associated spring (71), and ramps (76) formed in an inner surface portion (74) of the internal bore (65) of the piston (28).

7. A disc brake caliper assembly as claimed in any one of Claims 1 to 5, wherein the one-way clutch assembly (68') comprises a pre-assembled one-way clutch (82) comprising a cage (86) which is fixedly secured to the piston (28) within the internal bore (65) of the piston, and rollers (84), each with an associated spring.

8. A disc brake caliper assembly as claimed in any one of the preceding Claims, wherein the actuator nut (150) comprises an inner sleeve (152) having an external shaped portion (160) over a portion of its length; and an outer sleeve (154) having a correspondingly shaped internal portion (164) which prevents rotation of the outer sleeve relative to the inner sleeve, but which allows limited relative lateral movement.

9. A disc brake caliper assembly as claimed in Claim 8, wherein the shaped portions (160,164) are hexagonal in cross-section.

Fig .1.

Fig .2.

EP 0 314 282 A1

Fig.3.

Fig.4.

**Fig.5.**

**Fig.6.**

**Fig.7.**

**Fig.8.**

Fig. 9.

Fig. 10.

# Fig. 11.

# Fig. 12.

# Fig.13.

# Fig.14.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | GB-A-1 297 495 (GENERAL MOTORS CORP.) <br> * Whole document * | 1,2 | F 16 D 65/56 <br> F 16 D 65/16 <br> F 16 D 55/224 |
| A | US-A-4 256 206 (T. MAEHARA) <br> * Whole document * | 1,4,6,7 | |
| A | DE-A-3 507 246 (A. TEVES GmbH) <br> * Page 9, lines 5-20; figure * | 1,5,6,7 | |
| A | EP-A-0 062 567 (S.A. AUTOMOBILES CITROEN) <br> * Figure 1 * | 1 | |
| A | US-A-4 014 411 (T.F. TROESTER) <br> * Figures 1-3 * | 1,6 | |
| A | FR-A-2 410 179 (S.A. AUTOMOBILES CITROEN) <br> * Page 2, line 9 - page 4, line 9; figures 1,2 * | 1,2 | |
| A | EP-A-0 127 314 (GENERAL MOTORS CORP.) <br> * Figures 1,2 * | 1-3,6,7 | **TECHNICAL FIELDS SEARCHED (Int. Cl.4)** <br><br> F 16 D 65/00 <br> F 16 D 55/00 |

The present search report has been drawn up for all claims

| Place of search | Date of completion of the search | Examiner |
|---|---|---|
| THE HAGUE | 01-03-1989 | BRAEMS C.G.I. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)